(19) Europäisches Patentamt

European Patent Office

Office européen des brevets

(11) EP 0 592 659 B1

(12) FASCICULE DE BREVET EUROPEEN

(45) Date de publication et mention
de la délivrance du brevet:
**06.08.1997 Bulletin 1997/32**

(21) Numéro de dépôt: **93911841.0**

(22) Date de dépôt: **03.05.1993**

(51) Int Cl.[6]: **G01N 27/04**, G01R 27/08

(86) Numéro de dépôt international:
**PCT/FR93/00425**

**WO 93/22664 (11.11.1993 Gazette 1993/27)**

(54) **CELLULE DE MESURE DE LA RESISTIVITE D'UN ECHANTILLON**

MESSZELLE ZUM MESSEN DES SPEZIFISCHEN WIDERSTANDS EINER PROBE

SAMPLE RESISTIVITY MEASUREMENT CELL

(84) Etats contractants désignés:
**BE CH DE GB LI**

(30) Priorité: **04.05.1992 FR 9205448**

(43) Date de publication de la demande:
**20.04.1994 Bulletin 1994/16**

(73) Titulaire: **COMMISSARIAT A L'ENERGIE
ATOMIQUE
75752 Paris Cédex 15 (FR)**

(72) Inventeurs:
• **SEITE, François
F-33600 Pessac (FR)**
• **AUTHESSERRE, Jacques
F-33170 Gradignan (FR)**
• **LE BLEVENNEC, Gilles
F-33610 Gazinet-Cestas (FR)**

(74) Mandataire: **Ilgart, Jean-Christophe et al
c/o Société Brevatome,
25, rue de Ponthieu
F-75008 Paris (FR)**

(56) Documents cités:
• REVIEW OF SCIENTIFIC INSTRUMENTS. vol. 61, no. 7, Juillet 1990, NEW YORK US pages 1949 - 1953 L. PLOMP ET AL 'A four-probe ac apparatus for the high- resolution conductivity measurement of ceramic oxides at high temperatures'
• JOURNAL OF PHYSICS E. SCIENTIFIC INSTRUMENTS vol. 8, no. 1, Janvier 1975, BRISTOL GB pages 13 - 15 A.M. GEORGE ET AL 'A four point-probe cell for resistivity measurement at high temperature' cité dans la demande
• JOURNAL OF PHYSICS E. SCIENTIFIC INSTRUMENTS vol. 14, no. 6, Juin 1981, BRISTOL GB pages 699 - 700 I.M. TEMPLETON 'A residual resistance probe for small metal samples'

## Description

L'invention se rapporte à une cellule de mesure de la résistivité d'un échantillon.

Elle utilise la méthode de mesure dite des quatre pointes selon laquelle on injecte un courant par deux fils électriques au contact de l'échantillon-et on mesure la tension obtenue à l'extrémité de deux autres fils électriques, également au contact de l'échantillon. Certains problèmes apparaissent cependant quand on veut mesurer à très haute ou très basse température, car il faut alors placer l'ensemble dans une enceinte et les dilatations thermiques peuvent créer des problèmes compliqués si on veut assurer un placement correct des pièces. Dans l'article de A.M. George et I.K. Gopalakrishnan paru dans le "Journal of Physics" E, année 1975, vol. 8, n 1, pp. 13-15, l'enceinte est un étui cylindrique vertical, l'échantillon est posé sur un support au fond de l'enceinte et un mât repoussé par un ressort et coaxial à l'enceinte presse sur l'échantillon un bloc de zircone dans lequel les quatre pointes sont insérées de manière à en dépasser, de sorte qu'elles viennent piquer la surface supérieure de l'échantillon.

On peut cependant toujours craindre des contacts électriques insuffisants, et de plus ce dispositif n'est conçu que pour des mesures dans l'atmosphère ambiante.

C'est pourquoi l'invention concerne un dispositif de cellule de mesure qui garantit que les contacts électriques sont toujours faits dans de bonnes conditions. Sous sa forme plus générale, elle consiste en une cellule de mesure de la résistivité d'un échantillon parallélépipédique au moyen de quatre fils électriques comportant chacun une extrémité, caractérisée en ce que les quatre extrémités sont réparties en deux paires, les extrémités de chaque paire sont posées sur une face respective de l'échantillon, lesdites deux faces de l'échantillon étant opposées, en ce qu'elle comprend deux blocs inférieur et supérieur disposés l'un sur l'autre, guidés l'un par rapport à l'autre et munis chacun d'une face horizontale sur laquelle une des paires des extrémités est placée, l'échantillon étant placé entre deux faces horizontales.

La manipulation est facilitée si, quand un four est associé à la cellule pour des mesures à haute température (ou un cryostat pour des mesures à basse température), la cellule comprend une enceinte dans laquelle les blocs et l'échantillon sont logés, un dispositif étant prévu pour déplacer l'enceinte en la faisant au moins partiellement entrer dans le four et sortir du four.

Si de plus l'enceinte est essentiellement en forme de cylindre disposé verticalement, il est avantageux de suspendre l'enceinte au dispositif pour la déplacer par un soufflet, car un bon centrage peut ainsi être obtenu par rapport au four.

On peut enfin avantageusement fixer les extrémités des fils aux blocs de façon que les extrémités posées sur les faces horizontales soient en relief vers l'échantillon.

On va maintenant décrire l'invention plus en détail à l'aide d'une réalisation de celle-ci, annexée à titre illustratif et non limitatif :

- la figure 1 est une vue d'ensemble du dispositif d'utilisation de la cellule,
- la figure 2 illustre l'enceinte qui contient la cellule,
- les figures 3 et 4 représentent deux traversées de cloisons étanches représentant respectivement le passage des liaisons électriques et des thermocouples,
- les figures 5, 6 et 7 représentent des vues de face, de côté et de dessus de la cellule,
- et les figures 8 et 9 illustrent les conditions d'essai et de mesure de résistivité.

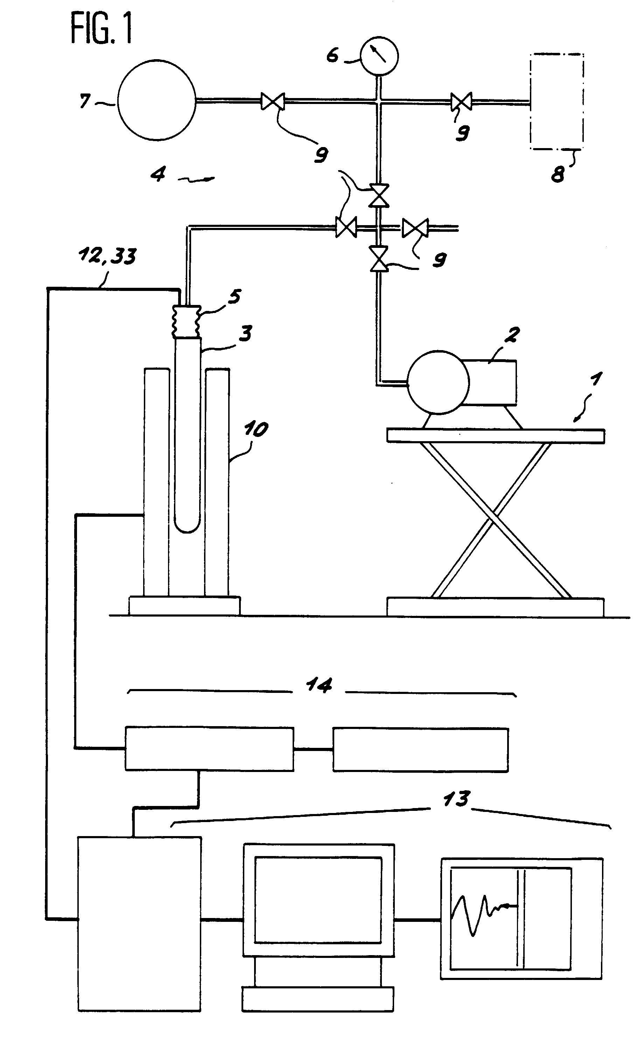

On se reporte d'abord à la figure 1.

Le système de mesure et d'essai comprend, outre la cellule proprement dite, une table élévatrice 1 sur laquelle est fixée une pompe à vide 2, qui est reliée à l'enceinte 3 contenant la cellule par un ensemble de canalisations 4 et par un soufflet d'acier inoxydable 5. Les canalisations 4 aboutissent également à un manomètre 6, à un ballon 7 pour maintenir la pression constante dans l'enceinte 3 et à une source d'argon 8. Des vannes 9 disposées sur les canalisations 4 permettent d'établir les connexions souhaitées, que ce soit pour aspirer, pour insuffler de l'argon, pour modifier la pression ou pour rétablir l'atmosphère normale.

L'enceinte 3 est un cylindre vertical dont le fond est fermé et qui peut être plus ou moins enfoncé dans un four 10 cylindrique par suite des déplacements verticaux de la table 1, ou au contraire extrait de celui-ci.

La mesure est faite par des fils électriques 12 partiellement engagés dans l'enceinte 3 et reliés à une chaîne de mesure 13 qui peut comprendre en particulier un ordinateur de commande, une armoire d'appareils de mesure et des moyens de sorties graphiques. Des moyens de commande 14 du four 10 (boite de commande et enregistreur de température) sont également prévus.

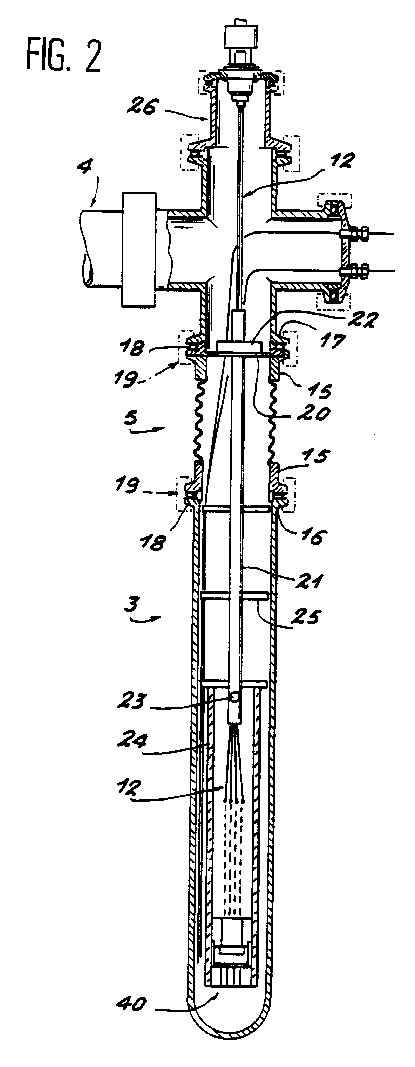

L'étanchéité est sauvegardée (figure 2) grâce à deux brides 15 situées aux extrémités du soufflet 5 et qui coopèrent avec une bride 16 située au sommet de l'enceinte 3 et une bride 17 située au bout de l'ensemble de canalisations 4 pour comprimer des joints d'étanchéité circulaires 18. Des colliers 19 formés de deux parties articulées et munis de surfaces internes coniques complémentaires de surfaces externes coniques des brides 15, 16 et 17 assurent le serrage. Une rondelle de support 20 est intercalée entre les brides 15 et 17 afin de servir d'appui à un tube 21 dans lequel les fils 12 sont engagés sur une partie de leur longueur. Le tube 21 est contenu au centre de l'enceinte 3 et s'étend verticalement. Une clavette 22 est posée sur la rondelle 20 et engagée à travers un perçage du tube 21 pour empêcher celui-ci de tomber. Une clavette 23 est engagée de même dans un perçage inférieur du tube 21 et permet d'y suspendre une chape 24 porteuse de l'échantillon. L'enceinte est cloisonnée en compartiments par des barrières d'isolation thermique 25 parallèles entre elles et réparties entre le fond de l'enceinte 3 et sa sortie dans le soufflet 5.

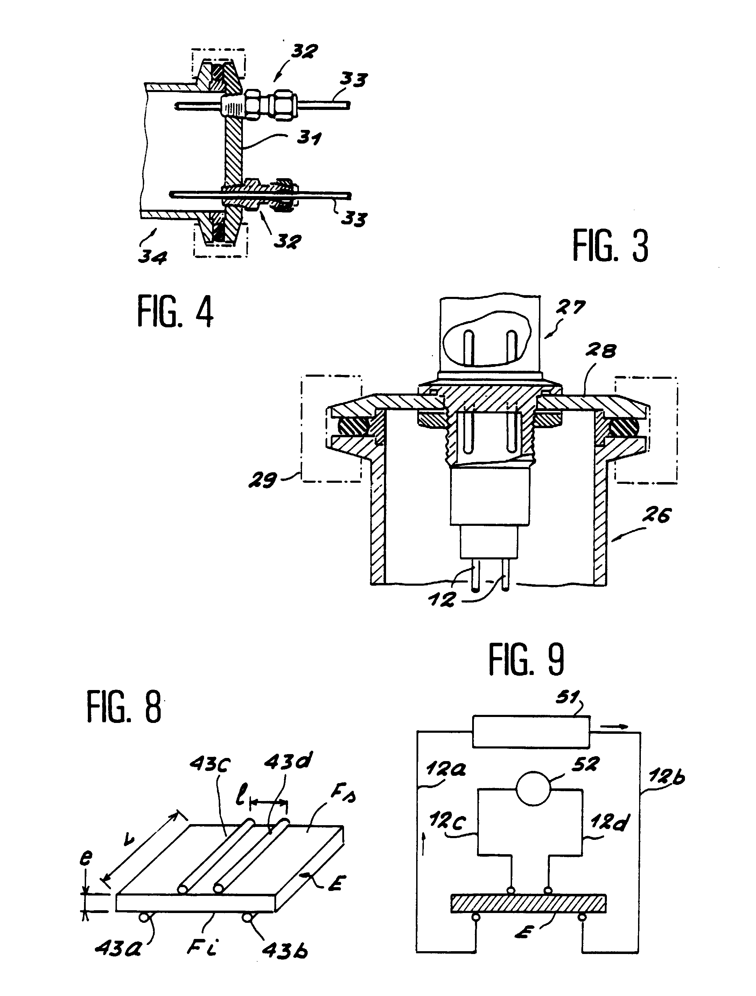

L'ensemble de canalisations 4 comporte un appendice 26 (figure 3) où les fils électriques 12 empruntent des passages étanches 27 vissés à une fausse bride 28, bridée à l'appendice 26 par un collier 29.

Une fausse bride 31 est de même (figure 4) prévue sur un autre appendice 34 de l'ensemble de canalisations 4. Elle porte des traversées de cloisons 32 pour permettre à des fils 33 reliés à la chaîne de mesure 13 de passer dans l'enceinte 3 sans compromettre l'étanchéité de cette dernière. Les fils 33 aboutissent à des thermocouples qui mesurent la température dans différents endroits de l'enceinte 3.

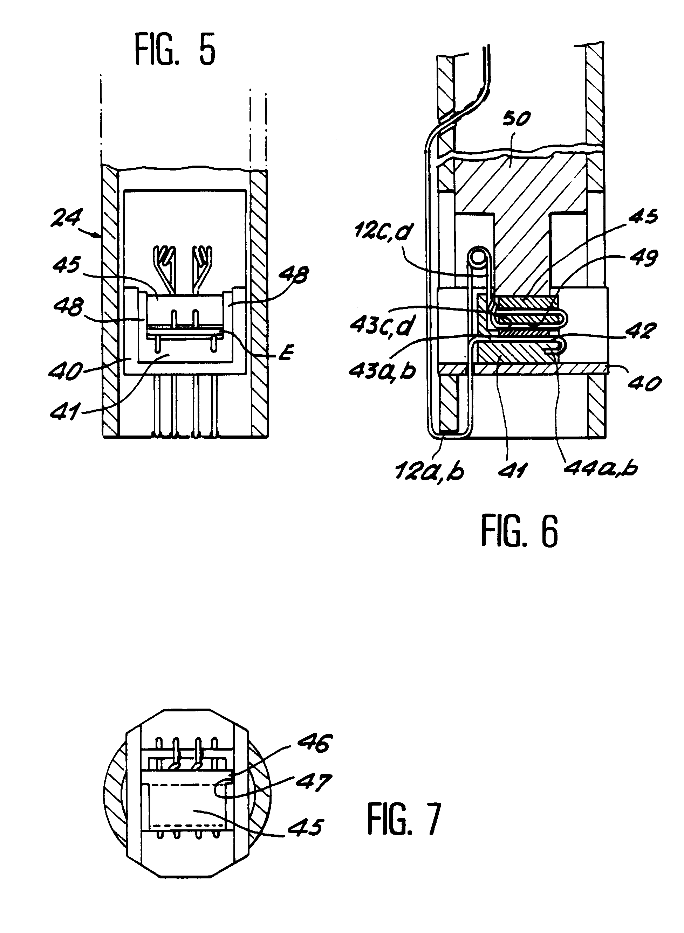

La chape 24 supporte une nacelle 40 à son extrémité inférieure. La nacelle 40 est en forme de U et un bloc inférieur 41 lui est fixé (figures 5, 6 et 7). Il comporte une face supérieure 42 horizontale qui reçoit les extrémités de deux des fils 12a et 12b, qui sont pliées de telle façon que des portions de contact 43a et 43b de ces extrémités, posées sur la face supérieure horizontale 42 dans deux rainures, en soient cependant légèrement en relief en permanence. On peut pour cela engager les bouts 44a et 44b des fils 12a et 12b dans des perçages horizontaux du bloc inférieur 41 sans les recourber excessivement : l'encastrement des bouts 44a et 44b maintient en place les portions de contact 43a et 43b.

Un bloc supérieur 45 s'encastre au-dessus du bloc inférieur 41, car il possède des proéminences 46 qui s'ajustent dans des logements ou dégagements 47 établis sur des flancs surélevés 48 du bloc inférieur 41. Il comporte une face plane inférieure 49 sous laquelle des portions de contact 43c et 43d aux extrémités des deux autres fils 12c et 12d sont disposées. Selon un principe analogue à celui des fils 12a et 12b, les bouts 44c et 44d de ces fils sont engagés dans des perçages horizontaux du bloc supérieur 45 de manière que les portions de contact 43c et 43d soient également, à l'état libre, en relief sous la face inférieure horizontale 49.

Pendant l'essai, l'échantillon E est glissé entre les blocs 41 et 45 et un poids 50 qui coulisse dans la chape 24 pèse sur le bloc supérieur 45, de sorte que les portions de contact 43 des fils électriques 12 sont comprimées contre la face inférieure Fi de l'échantillon E pour les fils 12a et 12b et sur la face supérieure Fs, opposée à la précédente, de l'échantillon E pour les fils 12c et 12d. Elles restent comprimées contre le bloc inférieur 41 et le bloc supérieur 45 quand l'ensemble est démonté. Leur position est garantie et immuable dans tous les essais, ainsi qu'un contact parfait avec l'échantillon E, si on prend la précaution de pourvoir les blocs 41 et 45 de rainures dans lesquelles elles peuvent partiellement s'enfoncer.

Les portions de contact 43 forment ainsi quatre segments parallèles sur l'échantillon E ; les écartements entre les portions 43a et 43b et entre les portions 43c et 43d sont parfaitement connus. Si on injecte au moyen d'un générateur 51 (figure 9) du courant continu à travers l'échantillon E par les fils 12a et 12b, la tension recueillie par un voltmètre 52 et établie dans l'échantillon E entre les fils 12c et 12d peut permettre de calculer avec facilité la résistance du circuit total incluant l'échantillon E, et donc la résistivité du matériau par la formule :

$$\rho = \frac{eL}{l} \cdot \frac{U}{I}$$

où (figure 8) l désigne l'écartement des portions de contact 43c et 43d, e et L l'épaisseur et la largeur (dimension dans la direction des portions de contact 43c et 43d) de l'échantillon E, U la tension mesurée par le voltmètre 52 et I l'intensité du courant qui passe à travers les fils 12a et 12b. Cette formule est satisfaisante si l est suffisamment grand par rapport à e, par exemple le double, car les lignes de courant deviennent sensiblement parallèles.

La souplesse du dispositif, et en particulier la suspension de l'enceinte 3 par le soufflet 5 et celle de la cellule de mesure proprement dite (constituée essentiellement par les portions de contact 43 et les blocs 41 et 45) par la chape 24 et le tube 21 permettent d'enfourner sans risque l'enceinte 3 et de ne jamais introduire de coincement. Les dilatations thermiques ne sont pas susceptibles de produire des déformations qui provoqueraient des défauts de connexion électrique ou des déplacements des éléments de la cellule de mesure qui disqualifieraient l'essai.

Les matériaux des pièces sont choisis de façon adaptée aux diverses contraintes rencontrées et en particulier à la température prévue pour l'essai et aux réactions chimiques qui risquent de se produire entre les différentes pièces. C'est ainsi que les fils 12 ne doivent pas réagir avec l'échantillon E. Les blocs 41 et 45 sont de préférence en matériau non poreux afin que toutes les impuretés conductrices qui pourraient être déposées sur eux puissent être nettoyées facilement, et l'enceinte 3 est également, de préférence, non poreuse afin de ne pas retenir du gaz d'une nature qui n'est pas souhaitée et qui se dégagerait quand le vide serait créé.

Les blocs 41 et 45 peuvent être en alumine ou nitrure de bore, et l'enceinte 3 en alumine ou en quartz.

Le four 10 pourrait être remplacé par un cryostat de même forme sans altération des avantages de l'invention.

## Revendications

1. Cellule de mesure de la résistivité d'un échantillon parallélépipédique (E) au moyen de quatre fils (12) électriques comportant chacun une extrémité (43, 44), caractérisée en ce que les quatre extrémités sont réparties en deux paires, les extrémités de chaque paire sont posées sur une face respective (Fi, Fs) de l'échantillon, lesdites deux faces de l'échantillon étant opposées, en ce qu'elle comprend deux blocs inférieur (41) et supérieur (45) disposés l'un sur l'autre, coulissant l'un dans l'autre et munis chacun d'une face horizontale sur laquelle une des paires des extrémités est placée, l'échantillon étant placé entre les deux faces horizontales.

2. Cellule selon la revendication 1, à laquelle est associé un four (10) et comprenant une enceinte (3) dans laquelle les blocs et l'échantillon sont logés, caractérisée par un dispositif (1) pour déplacer l'enceinte en la faisant au moins partiellement entrer dans le four et sortir du four.

3. Cellule selon la revendication 2, où l'enceinte est essentiellement en forme de cylindre disposé verticalement, caractérisée en ce que l'enceinte est suspendue au dispositif pour la déplacer par un soufflet (5).

4. Cellule selon la revendication 3, caractérisée par un moyen, inclus dans l'enceinte, de suspension (21, 24) des blocs.

5. Cellule selon la revendication 1, caractérisée par des barrières thermiques (25) cloisonnant l'enceinte en compartiments entre les blocs et une sortie de l'enceinte.

6. Cellule selon la revendication 1, caractérisée en ce que l'enceinte est étanche et pourvue de moyens (2, 4, 8) de remplacement de l'atmosphère qu'elle contient ou d'établissement du vide.

7. Cellule selon la revendication 1, caractérisée par un poids (50) coulissant et pesant sur le bloc supérieur (45).

8. Cellule selon la revendication 1, caractérisée en ce que les fils sont fixés aux blocs de façon que les extrémités posées sur les faces horizontales soient parfaitement en contact avec l'échantillon (E).

**Patentansprüche**

1. Meßzelle zum Messen des spezifischen Widerstands einer parallelflachen Probe (E) mittels vier elektrischen Drähten (12), von denen jeder ein Ende (43, 44) umfaßt,
**dadurch gekennzeichnet**,
daß die vier Enden auf zwei Paare verteilt sind, die Enden jedes Paars an jeweils eine Seite (Fi, Fs) der Probe gelegt werden, wobei die beiden seiten der Probe entgegengesetzt sind, dadurch, daß sie zwei Blöcke umfaßt, einen unteren (41) und einen oberen (45), aufeinander angeordnet, ineinander gleitend und jeder mit einer horizontalen Fläche versehen, auf der sich eines der Enden-Paare befindet, wobei die Probe zwischen den beiden horizontalen Flächen angeordnet ist.

2. Zelle nach Anspruch 1, der ein Ofen (10) zugeordnet ist und die einen Behälter (3) umfaßt, in den die Blöcke und die Probe eingesetzt sind, gekennzeichnet durch eine Vorrichtung (1) zum Verschieben des Behälters, indem man ihn wenigstens teilweise in den Ofen einführt und aus dem Ofen herauszieht.

3. Zelle nach Anspruch 2, wo der Behälter im wesentlichen die Form eines vertikal angeordneten Zylinders aufweist, dadurch gekennzeichnet, daß der Behälter an der Vorrichtung aufgehängt ist, um ihn mittels eines Faltenbalgs (5) zu verschieben.

4. Zelle nach Anspruch 3, gekennzeichnet durch eine in den Behälter eingeschlossene Aufhängeinrichtung (21, 24) der Blöcke.

5. Zelle nach Anspruch 1, dadurch gekennzeichnet, daß Wärmebarrieren (25) den Behälter zwischen den Blöcken und einem Behälterausgang in Abteile unterteilen.

6. Zelle nach Anspruch 1, dadurch gekennzeichnet, daß der Behälter dicht ist und mit Einrichtungen (2, 4, 8) zum Austauschen der Atmosphäre, die er enthält, oder zum Herstellen des Vakuums versehen ist.

7. Zelle nach Anspruch 1, gekennzeichnet durch ein Gewicht (50), das gleitet und auf dem oberen Block (45) lastet.

8. Zelle nach Anspruch 1, dadurch gekennzeichnet, daß die Drähte derart an den Blöcken befestigt sind, daß die auf den horizontalen Flächen liegenden Enden einen einwandfreien Kontakt mit der Probe haben.

**Claims**

1. Cell for measuring the resistivity of a parallelepipedal sample (E) by means of four electric wires (12) each having an end (43, 44), characterized in that the four ends are divided into two pairs, the ends of each pair are placed on a respective face (Fi, Fs) of the sample, the said two faces of the sample being opposite, in that it comprises two units, a lower unit (41) and an upper unit (45) which are arranged on one another, slide in one another and are each provided with a horizontal face on which one of the pairs of the ends is placed, the sample being placed between the two horizontal faces.

2. Cell according to Claim 1, having an associated furnace (10) and comprising an enclosure (3) in which the units and the sample are housed, characterized by a device (1) for moving the enclosure while making it at least partially enter the furnace and exit the furnace.

3. Cell according to Claim 2, in which the enclosure is essentially in the form of a vertically arranged cylinder, characterized in that the enclosure is suspended from the device for moving it by a bellows (5).

4. Cell according to Claim 3, characterized by a means (21, 24), included in the enclosure for suspending the units.

5. Cell according to Claim 1, characterized by thermal barriers (25) partitioning the enclosure into compartments between the units and an exit of the enclosure.

6. Cell according to Claim 1, characterized in that the enclosure is leaktight and provided with means (2, 4, 8) for replacing the atmosphere which it contains or for establishing a vacuum.

7. Cell according to Claim 1, characterized by a weight (50) sliding and bearing on the upper unit (45).

8. Cell according to Claim 1, characterized in that the wires are fixed to the units in such a way that the ends placed on the horizontal faces are perfectly in contact with the sample (E).

# FIG. 1

# FIG. 2

FIG. 4

FIG. 3

FIG. 8

FIG. 9

# FIG. 5

# FIG. 6

# FIG. 7